# EUROPEAN PATENT APPLICATION

(11) **EP 2 835 157 A1**
(43) Date of publication of application: **11.02.2015**
(21) Application number: 14179480.0
(22) Date of filing: 01.08.2014
(51) Int. Cl.: A63C 10/00

(54) **Method for providing components made of composite material for a snowboard binding**

(30) Priority: 06.08.2013 IT MI20131346
(71) Applicant: CORE S.r.l., 23014 Delebio (SO) (IT)
(72) Inventor: Fumagalli, Martino, 23823 Colico (IT)
(74) Representative: Modiano, Micaela Nadia

(57) **Abstract**

A method for providing at least one component of a snowboard binding, comprising the steps consisting in:
- using a material of the SMC (Sheet Molding Compound) type, constituted by discontinuous fibers of carbon or glass or hybrid, arranged randomly and interposed between two layers of polymeric resin;
- arranging the material in a mold for a step of pressure molding by means of metallic mold parts;
- performing the pressure molding step at a temperature and a pressure that are higher than the ambient values, with a low or high flow of material to fill the cavity of the mold;
- extracting the component from the mold.

## Description

The present invention relates to a method for providing components of a snowboard binding made of composite material. More particularly, the invention relates to a method adapted to be used to provide at least one component of a snowboard binding, including the base, base plate, heel cup, rear spoiler and other smaller components, such as the pumping levers or other fixing or closure levers, always related to snowboard bindings.

As is known, snowboard bindings are made of several materials, for example aluminum, although currently they are no longer widespread, or injection-molded plastics, both monolithic and composite (with glass fibers or carbon fibers). All the methods mentioned above are used currently to provide snowboard binding components such as the base, the spoiler and the heel cup part that is connected to the base at one end and to which the spoiler is articulated at the other end. Other materials used for example to provide the base plate can include glass/nylon, carbon fiber and glass fiber.

The bands for tightening the binding around the foot of the user are instead usually made of different materials.

On the other hand, the requirement of bindings is to be as lightweight as possible yet maintaining the strength and rigidity required by the working loads.

The aim of the present invention is to use a method for manufacturing one or more of such components that has better characteristics of light weight and solidity than components made using materials and methods of a known type.

Within this aim, an object of the present invention is to provide a method for manufacturing a component of a snowboard binding that allows to provide the binding in an extremely short time.

Another object of the present invention is to provide a method for manufacturing a component of a snowboard binding that is highly reliable, relatively simple to provide and at competitive costs.

This aim, as well as these and other objects that will become better apparent hereinafter, are achieved by a method for providing components of a snowboard binding, characterized in that it comprises the steps consisting in:
- using a material of the SMC (Sheet Molding Compound) type, constituted by discontinuous fibers of carbon or glass or hybrid, arranged randomly and interposed between two layers of polymeric resin;
- arranging said material in a mold composed of metallic mold parts for a step of pressure molding;
- performing the pressure molding step at a temperature and a pressure that are higher than the ambient values, with a low or high flow of material to fill the cavity of the mold;
- extracting the component from the mold.

Further characteristics and advantages of the invention will become better apparent from the description of a preferred but not exclusive embodiment of the method according to the present invention.

The method according to the invention uses a material known as Sheet Molding Compound (SMC), constituted by a sheet of short fibers of carbon or glass, measuring from approximately 12 mm (0.5 inches) to approximately 76 mm (3 inches), distributed randomly (in a pseudorandom manner) in a sheet, which is interposed between two layers of polymeric resin (typically polyester, vinyl ester or epoxy resin) and compacted between rollers and then gathered in rolls.

The resulting material is inserted in a "mold" that has one or more cavities and is composed of complementary mold parts (male and female).

The mold has a shear wall, i.e., a perimetric border that is inserted with minimal clearance between the male and female mold parts.

The mold is then heated with hardening temperatures preferably between 100 °C and 250 °C, a pressure of 6-100 bar and a material hardening time of 1 to 15 minutes.

The method for molding a component of the snowboard binding entails a step of compression, in which the material described above is arranged initially in the mold and in which the lower mold portion is heated in order to heat the lower part of the material inserted in the lower mold part and reduce its viscosity.

At this point the mold closure step begins and the upper mold part abuts against the lower mold part (female mold part) and pressure begins to build up once the mold makes contact with the material.

At this point, the material is distributed in the cavity of the mold and assumes a selected shape under the pressure applied by the upper mold part.

The material is then kept under pressure until the part has hardened and then the mold is opened and the ejectors of the lower mold part allow to extract the finished part.

The method described above allows to provide parts, in this case parts of a snowboard binding, by means of a pressure molding process, using a composite material constituted by short fibers of carbon or glass or hybrid (carbon/glass).

The material used with the method described above allows to obtain extremely lightweight and strong parts, integrating also other details such as logos, sets of teeth or subparts for fixing, such as inserts or washers.

Moreover, it is possible to obtain subparts with different thicknesses, which is not possible with ordinary processes for working carbon fiber or glass fiber.

Furthermore, the production times of the parts cited above can be extremely short in comparison with the technologies normally used.

The snowboard binding component that can be provided with the method according to the invention can be one or more among the base of the binding, the heel cup, the spoiler of the binding, the pumping levers of the binding closure bands or other subparts such as logos or closure levers or fixing levers.

In practice it has been found that the method and the product according to the present invention achieve fully the aim and the intended objects, since they allow to provide a method for molding a component of a snowboard binding rapidly and simply and to obtain a product that is at once lightweight and strong.

Furthermore, the component thus obtained has an an appearance similar to marble or briar but is obtained by means of carbon fiber.

The method and the product thus conceived are susceptible of numerous modifications and variations, all of which are within the scope of the appended claims. All the details may further be replaced with other technically equivalent elements.

In practice, the materials used, as well as the contingent shapes and dimensions, may be any according to requirements and to the state of the art.

The disclosures in Italian Patent Application No. MI2013A001346 from which this application claims priority are incorporated herein by reference.

## Claims

1. A method for providing at least one component of a snowboard binding, **characterized in that** it comprises the steps of:
- using a material of the SMC (Sheet Molding Compound) type, constituted by discontinuous fibers of carbon or glass or hybrid, arranged randomly and interposed between two layers of polymeric resin;
- arranging said material in a mold for a step of pressure molding by means of metallic mold parts;
- performing the pressure molding step at a temperature and a pressure that are higher than the ambient values, with a low or high flow of material to fill the cavity of the mold;
- extracting the component from the mold.

2. The method according to claim 1, **characterized in that** said pressure molding step is performed at a temperature comprised between 100 and 250°C.

3. The method according to claim 1, **characterized in that** said pressure molding step is performed at a pressure comprised between 6 and 100 bars.

4. The method according to claim 1, **characterized in that** the hardening time of said material within said mold is comprised between 1 and 15 minutes.

5. A snowboard binding component, **characterized in that** it is provided by means of the method according to one or more of the preceding claims.

6. The snowboard binding component according to claim 5, **characterized in that** it is made of a material in sheet form that is constituted by short fibers of carbon, glass or hybrid arranged between two layers of polymeric resin.

7. The snowboard binding component according to claim 6, **characterized in that** it is one of the following: a base, a base plate, a heel cup, a spoiler, a truck, or a pumping lever or closure lever of the snowboard binding.

8. The snowboard binding component according to claim 5, **characterized in that** it has an appearance similar to marble or briar.
